# EUROPEAN PATENT APPLICATION

(11) **EP 4 718 804 A1**
(43) Date of publication of application: **01.04.2026**
(21) Application number: 24829827.5
(22) Date of filing: 06.02.2024
(51) Int. Cl.: H04L 41/12

(54) **TOPOLOGY INFORMATION DISPLAY METHOD AND APPARATUS, DEVICE, AND COMPUTER READABLE STORAGE MEDIUM**

(30) Priority: 30.06.2023 CN 202310798719
(71) Applicant: Huawei Technologies Co., Ltd., Shenzhen, Guangdong 518129 (CN)
(72) Inventor: SUN, Changsheng, Shenzhen, Guangdong 518129 (CN); HUANG, Chen, Shenzhen, Guangdong 518129 (CN); LIU, Jusan, Shenzhen, Guangdong 518129 (CN)
(74) Representative: Isarpatent
(86) International application number: PCT/CN2024/076395
(87) International publication number: WO 2025/001168

(57) **Abstract**

This application discloses a topology information display method, apparatus, and device, and a computer-readable storage medium, and pertains to the field of communication technologies. The method includes: obtaining topology information of a common subnet corresponding to a display request specific to a first network resource, where the common subnet includes a first subnet and a second subnet, the first subnet is a subnet that includes the first network resource, the second subnet is a subnet other than the first subnet, and the topology information includes information about at least one network resource of the first subnet and the second subnet, and a connection relationship between the at least one network resource; and displaying the first network resource in a distinguishable manner on a basis of displaying the topology information. The topology information including the information about the at least one network resource of the first subnet and the second subnet and the connection relationship between the at least one network resource is displayed, so that the displayed topology information is more comprehensive. The first network resource is displayed in the distinguishable manner in the topology information, so that the first network resource is displayed with a good visualization effect.

## Description

This application claims priority to Chinese Patent Application No. 202310798719.3, filed on June 30, 2023 and entitled "TOPOLOGY INFORMATION DISPLAY METHOD, APPARATUS, AND DEVICE, AND COMPUTER-READABLE STORAGE MEDIUM", which is incorporated herein by reference in its entirety.

### TECHNICAL FIELD

This application relates to the field of communication technologies, and in particular, to a topology information display method, apparatus, and device, and a computer-readable storage medium.

### BACKGROUND

With development of communication technologies, information in a communication process is increasingly diversified and abundant. For example, topology information may be presented by using a network topology. Therefore, topology information that needs to be displayed may be determined, and the determined topology information is displayed accordingly, to meet a requirement of a user for obtaining the topology information.

### SUMMARY

This application provides a topology information display method, apparatus, and device, and a computer-readable storage medium, to display more comprehensive topology information. Technical solutions are as follows.

According to a first aspect, a topology information display method is provided. The method includes: obtaining topology information of a common subnet corresponding to a display request specific to a first network resource, where the common subnet includes a first subnet and a second subnet, the first subnet is a subnet that includes the first network resource, the second subnet is a subnet other than the first subnet, and the topology information includes information about at least one network resource of the first subnet and the second subnet, and a connection relationship between the at least one network resource; and displaying the first network resource in a distinguishable manner on a basis of displaying the topology information.

The topology information including the information about the at least one network resource of the first subnet and the second subnet and the connection relationship between the at least one network resource is displayed, so that the displayed topology information is more comprehensive. The first network resource is displayed in a distinguishable manner in the topology information, so that the first network resource is displayed with a good visualization effect.

In a possible implementation, the common subnet is a subnet that is in a network topology and that includes the first network resource and includes a smallest quantity of network elements and/or is of a lowest level. The common subnet is determined by using this method, so that integrity of the first network resource in the common subnet can be ensured, and redundancy in topology information of the common subnet caused by determining a subnet with an excessively large extent as the common subnet can be prevented.

In a possible implementation, the first network resource includes a plurality of network elements, any one of the plurality of network elements corresponds to a reference subnet, and the reference subnet is a subnet that is in the network topology and that includes the any one of the network elements and includes a smallest quantity of network elements and/or is of a lowest level; and the common subnet is a subnet that is in the network topology and that includes the plurality of reference subnets corresponding to the plurality of network elements and includes a smallest quantity of network elements and/or is of a lowest level. If the first network resource includes the plurality of network elements, the plurality of reference subnets are first determined, and then the common subnet including the plurality of reference subnets is determined. This can ensure accuracy of the determined common subnet, further ensure integrity of the first network resource in the common subnet, and reduce possible redundancy in topology information of the common subnet.

In a possible implementation, the at least one network resource of the first subnet and the second subnet includes any one of the following: the first subnet and the second subnet; network elements in the first subnet and the second subnet; or network elements in the first subnet and network elements in the second subnet. Differences in the at least one network resource of the first subnet and the second subnet result in different corresponding displayed content of the at least one network resource, so that a manner of displaying the at least one network resource is more flexible.

In a possible implementation, the method further includes: obtaining association information of the common subnet, where the association information includes information about a second network resource connected to the common subnet, and a connection relationship between the second network resource and the at least one network resource of the first subnet and the second subnet; and displaying the association information of the common subnet on the basis of displaying the topology information. In addition to displaying the topology information of the common subnet, the association information of the common subnet may further be displayed. This makes displayed information more comprehensive, prevents a relationship between the common subnet and another network resource in the network topology from being disrupted, and improves integrity of the displayed topology information of the common subnet.

In a possible implementation, obtaining the association information of the common subnet includes: determining, in a third subnet based on the topology information of the common subnet and a subnet parameter of the third subnet connected to the common subnet, the second network resource connected to the common subnet, where the subnet parameter includes at least one of subnet density and subnet depth, the subnet density indicates a degree of density of network elements in the third subnet, and the subnet depth indicates a relative level of the third subnet with respect to a reference level; and determining the association information of the common subnet based on the second network resource. The second network resource is determined, based on the subnet parameter, in the third subnet connected to the common subnet, so that the determined second network resource can better meet a display requirement.

In a possible implementation, obtaining the topology information of the common subnet corresponding to the display request specific to the first network resource includes: obtaining an identifier that is of the first network resource and that is carried in the display request; and determining the topology information of the common subnet based on the identifier of the first network resource and the network topology. The topology information of the common subnet is determined based on the identifier of the first network resource, so that accuracy of the determined common subnet can be ensured, thereby ensuring accuracy of the topology information of the common subnet.

According to a second aspect, a topology information display apparatus is provided. The apparatus includes: an obtaining module, configured to obtain topology information of a common subnet corresponding to a display request specific to a first network resource, where the common subnet includes a first subnet and a second subnet, the first subnet is a subnet that includes the first network resource, the second subnet is a subnet other than the first subnet, and the topology information includes information about at least one network resource of the first subnet and the second subnet, and a connection relationship between the at least one network resource; and a display module, configured to display the first network resource in a distinguishable manner on a basis of displaying the topology information.

In a possible implementation, the common subnet is a subnet that is in a network topology and that includes the first network resource and includes a smallest quantity of network elements and/or is of a lowest level.

In a possible implementation, the first network resource includes a plurality of network elements, any one of the plurality of network elements corresponds to a reference subnet, and the reference subnet is a subnet that is in the network topology and that includes the any one of the network elements and includes a smallest quantity of network elements and/or is of a lowest level; and the common subnet is a subnet that is in the network topology and that includes the plurality of reference subnets corresponding to the plurality of network elements and includes a smallest quantity of network elements and/or is of a lowest level.

In a possible implementation, the at least one network resource of the first subnet and the second subnet includes any one of the following: the first subnet and the second subnet; network elements in the first subnet and the second subnet; or network elements in the first subnet and network elements in the second subnet.

In a possible implementation, the obtaining module is further configured to obtain association information of the common subnet, where the association information includes information about a second network resource connected to the common subnet, and a connection relationship between the second network resource and the at least one network resource of the first subnet and the second subnet; and the display module is further configured to display the association information of the common subnet on the basis of displaying the topology information.

In a possible implementation, the obtaining module is configured to: determine, in a third subnet based on the topology information of the common subnet and a subnet parameter of the third subnet connected to the common subnet, the second network resource connected to the common subnet, where the subnet parameter includes at least one of subnet density and subnet depth, the subnet density indicates a degree of density of network elements in the third subnet, and the subnet depth indicates a relative level of the third subnet with respect to a reference level; and determine the association information of the common subnet based on the second network resource.

In a possible implementation, the display module is configured to: obtain an identifier that is of the first network resource and that is carried in the display request; and determine the topology information of the common subnet based on the identifier of the first network resource and the network topology.

According to a third aspect, another communication apparatus is provided. The apparatus includes a network interface, a memory, and a processor. The communication interface, the memory, and the processor communicate with each other through an internal connection path. The memory is configured to store instructions. The processor is configured to execute the instructions stored in the memory, to control the communication interface to receive a signal and control the communication interface to send a signal. In addition, when the processor executes the instructions stored in the memory, the processor is enabled to perform the method according to any one of the first aspect or the possible implementations of the first aspect.

Optionally, there are one or more processors, and there are one or more memories.

Optionally, the memory may be integrated with the processor, or the memory and the processor are separately disposed.

According to a fourth aspect, a computer program (product) is provided. The computer program (product) includes computer program code. When the computer program code is run by a computer, the computer is enabled to perform the method according to any one of the first aspect or the possible implementations of the first aspect.

According to a fifth aspect, a computer-readable storage medium is provided. The computer-readable storage medium stores a program or instructions. When the program or the instructions are run on a computer, the method according to any one of the first aspect or the possible implementations of the first aspect is performed.

According to a sixth aspect, a chip is provided, including a processor, configured to: invoke, from a memory, instructions stored in the memory and run the instructions, so that a computer in which the chip is installed performs the method according to any one of the first aspect or the possible implementations of the first aspect.

According to a seventh aspect, another chip is provided, including an input interface, an output interface, a processor, and a memory. The input interface, the output interface, the processor, and the memory are connected through an internal connection path. The processor is configured to execute code in the memory. When the code is executed, a computer in which the chip is installed performs the method according to any one of the first aspect or the possible implementations of the first aspect.

It should be understood that, for beneficial effects achieved by the technical solutions of the second aspect to the seventh aspect of this application and the corresponding possible implementations, reference may be made to the technical effects of the first aspect and the corresponding possible implementations of the first aspect. Details are not described herein again.

### BRIEF DESCRIPTION OF DRAWINGS

FIG. 1 is a schematic of a structure of a subnet according to an embodiment of this application;
FIG. 2 is a diagram of an implementation scenario according to an embodiment of this application;
FIG. 3 is a schematic flowchart of a topology information display method according to an embodiment of this application;
FIG. 4 is a schematic of a topology structure of a multi-level and multi-subnet physical network model according to an embodiment of this application;
FIG. 5 is a schematic of a topology information display result according to an embodiment of this application;
FIG. 6 is a schematic of another topology information display result according to an embodiment of this application;
FIG. 7 is a schematic of still another topology information display result according to an embodiment of this application;
FIG. 8 is a schematic of yet another topology information display result according to an embodiment of this application;
FIG. 9 is a schematic of a to-be-displayed area according to an embodiment of this application;
FIG. 10 is a diagram of a structure of a topology information display apparatus according to an embodiment of this application; and
FIG. 11 is a diagram of a structure of a topology information display device according to an embodiment of this application.

### DESCRIPTION OF EMBODIMENTS

Terms used in implementations of this application are only used for explaining specific embodiments of this application rather than limiting this application.

With continuous development of an information and communications technology (information and communications technology, ICT) network, a scale of the network gradually expands, a quantity of network elements (network element, NE) in the network gradually increases, and connection relationships between the network elements are increasingly complex. Network element is a general term for various devices in the network. A device in the network may be a network element. For example, a server, a base station, or an equipment room each may be a network element. Two network elements may be connected to form a link. Two endpoints of the link are the two network elements. A plurality of adjacent links may be connected end-to-end to form a path. A plurality of network elements that are connected to each other may form a subnet (subnet). A subnet may include one or more network elements, and may further include one or more subnets.

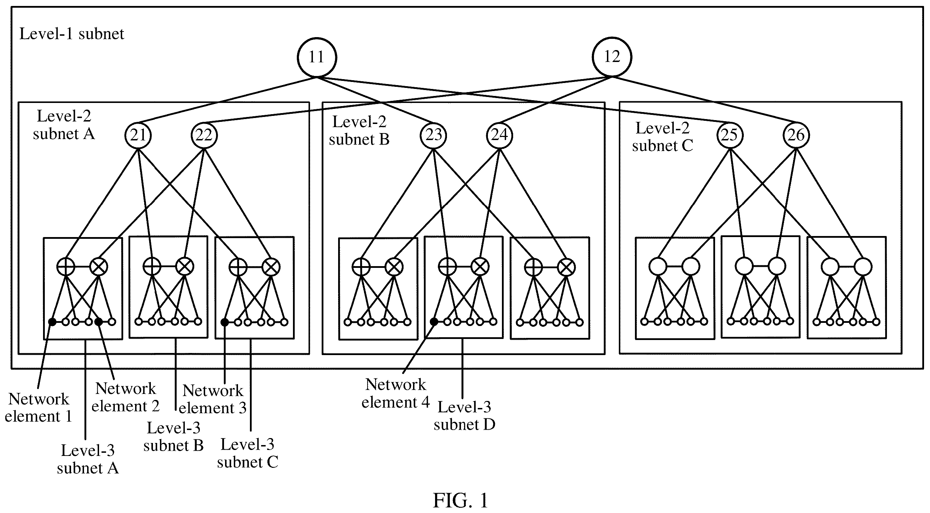

For example, FIG. 1 is a schematic of a structure of a subnet. A level-1 subnet is a subnet of a highest level in FIG. 1. The level-1 subnet includes a level-2 subnet A, a level-2 subnet B, and a level-2 subnet C. In other words, the level-2 subnet A, the level-2 subnet B, and the level-2 subnet C belong to the level-1 subnet. Correspondingly, a level-2 subnet includes a level-3 subnet. For example, in FIG. 1, the level-2 subnet A includes a level-3 subnet A, a level-3 subnet B, and a level-3 subnet C. Circles in FIG. 1 represent network elements, for example, a network element 21, a network element 22, and a network element 1. A connection line between any two network elements indicates that a communication connection can be implemented between the two network elements in a wired or wireless manner.

Any two network elements are connected to form a link. The two network elements on the link may be two network elements that both belong to a subnet of any level. For example, in FIG. 1, network elements represented by two black circles in the level-3 subnet A both belong to the level-3 subnet A. The two network elements may be connected to form a link as two endpoints of the link. A network element represented by a black circle in the level-3 subnet C and a network element 4 represented by a black circle in a level-3 subnet D both belong to a level-1 subnet 11. The two network elements may also be connected to form a link as two endpoints of the link.

It can be learned from the description of FIG. 1 that, due to an excessively large quantity of network elements in a network and a status of complex connections between the network elements, when the network elements in the network and connection relationships between the network elements are presented, a network topology needs to be organized in a multi-level and multi-subnet manner similar to that in FIG. 1, and a three-dimensional multi-way tree structure needs to be constructed, to clearly display a structure of the network. When performing jobs such as path computation, fault locating, service performance measurement, and resource search, service production personnel and operations and maintenance personnel need to search for a required network resource in a large-scale network topology, and accurately obtain network resource information from a displayed partial topology view.

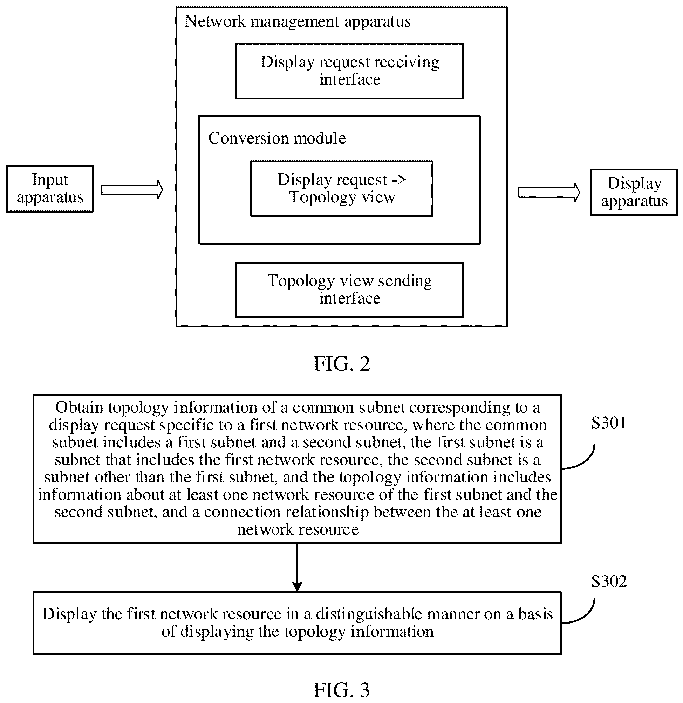

An embodiment of this application provides a topology information display method, to accurately focus on a network resource and display topology information corresponding to the network resource. FIG. 2 is a diagram of an implementation scenario of the method. The implementation scenario includes an input apparatus, a network management apparatus, and a display apparatus. The input apparatus, the network management apparatus, and the display apparatus may be integrated into different devices, or may be integrated into a same device. Alternatively, any two of the input apparatus, the network management apparatus, and the display apparatus may be integrated into a same device, and the other apparatus is integrated into another device. No matter how the input apparatus, the network management apparatus, and the display apparatus are integrated, communication can be implemented between the apparatuses by using wired or wireless connections.

A network management system is installed on the network management apparatus. The network management apparatus includes a display request receiving interface, a conversion module, and a topology view sending interface. The display request receiving interface can receive a display request sent by the input apparatus. Thus, the network management apparatus obtains the request of a user for displaying a network resource, and then may determine, in a network topology based on the display request, topology information corresponding to the network resource that needs to be displayed. For example, the conversion module in the network management apparatus determines, based on the display request, a topology view corresponding to the display request, and sends the topology view to the display apparatus through the topology view sending interface. The topology view is a view including the topology information that needs to be displayed. The display apparatus may display the received topology view, to display the topology information.

This embodiment of this application provides the topology information display method. The method can be applied to the implementation scenario shown in FIG. 2. FIG. 3 is a schematic flowchart of a topology information display method. The method includes but is not limited to the following S301 and S302.

S301: Obtain topology information of a common subnet corresponding to a display request specific to a first network resource, where the common subnet includes a first subnet and a second subnet, the first subnet is a subnet that includes the first network resource, the second subnet is a subnet other than the first subnet, and the topology information includes information about at least one network resource of the first subnet and the second subnet, and a connection relationship between the at least one network resource.

In a possible implementation, obtaining the topology information of the common subnet corresponding to the display request specific to the first network resource includes: obtaining an identifier that is of the first network resource and that is carried in the display request; and determining the topology information of the common subnet based on the identifier of the first network resource and a network topology.

For example, the input apparatus shown in FIG. 2 may determine, depending on a requirement of a user, a network resource for which focused display is required, that is, determine the first network resource, to determine the identifier of the first network resource to generate the display request. A focused display method is not limited in this embodiment of this application. For example, focused display may be prominent display of a network resource that needs to be displayed, at a central position of a display interface or a topology view. Prominent display may be highlighted display, enlarged display, stereoscopic display through three-dimensional projection, or the like. Focused display of the network resource required by the user makes an effect of displaying the network resource more intuitive, and improves efficiency of obtaining information about the displayed network resource from the display interface or the topology view by the user. In addition, a quantity and a type of network resources are not limited in this embodiment of this application. The network resource may include one or more network elements, subnets, links, and paths.

The following describes a process of determining the identifier of the first network resource. Optionally, if the first network resource is one or more network resources, the identifier of the first network resource may be determined according to a correspondence between the network resource and a resource identifier. The correspondence between the network resource and the resource identifier may be statically configured on the input apparatus manually, or may be obtained by the input apparatus through network-based dynamic learning. For example, if a requirement of the user is a requirement to perform focused display on a network element 63, that is, the first network resource is the network element 63, an identifier of the network element 63 may be determined according to the network resource and the resource identifier.

An application with a search function may further be deployed in the input apparatus. If a requirement of the user is a requirement to perform focused display on one or more indeterminate network resources, a fuzzy search may be performed based on the requirement of the user by using the application, to determine a search result of the fuzzy search. The search result may include one or more network resources, and the search result is the first network resource. Then, the identifier of the first network resource may be determined according to a correspondence between the network resource and a resource identifier. For example, if a requirement of the user obtained by the input apparatus is to perform focused display on network elements in an area A, the input apparatus may determine the network elements in an ICT network that belong to the area A, determine the network elements in the area A as the first network resource, and determine the identifier of the first network resource according to a stored correspondence between the network resources and resource identifiers.

For example, a resource identifier may be a number, a physical address, an Internet protocol (Internet protocol, IP) address, or the like that can identify a network resource in an ICT network. A type and a form of the resource identifier are not limited in this embodiment of this application. Resource identifiers may be classified into a single resource identifier of a single network resource and a group resource identifier of a plurality of network resources. For example, an identifier that can identify a single network element, a single subnet, a single link, or a single path is a single resource identifier. A plurality of network resources may be used as a group of network resources. The plurality of network resources included in the group of network resources may be network resources of a same type, or may be network resources of different types. For example, the group of network resources may include a plurality of network elements, or may not only include a plurality of network elements, but also include a plurality of links, a plurality of paths, or a plurality of subnets. The group of network resources corresponds to a group resource identifier. The group resource identifier corresponding to the group of network resources may be a combination of identifiers of the network resources in the group of network resources, or may be a standalone identifier that can identify the group of network resources.

For example, a single resource identifier of a single network element 63 may be a number 1863 of the network element 63; or may be a physical address of the network element 63: a location xx, a district C, a city B, a province A; or may be an IP address xxx.xxx.xx.63 of the network element 63. A network resource 3 is a group of network resources, including a network element 31 and a link 32. A group resource identifier corresponding to the network resource 3 may include identifiers of the network element 31 and the link 32, or may be a standalone identifier that can identify the group of network resources.

After the identifier of the first network resource is determined, the identifier of the first network resource may be used as a request parameter to generate a display request used for requesting to perform focused display on the first network resource, that is, the display request specific to the first network resource. The input apparatus sends the generated display request to the network management apparatus through the display request receiving interface. The display request may be sent to the network management apparatus by the input apparatus under control of the user, or may be sent, after a search, to the network management apparatus by the input apparatus under control of the application that performs the search.

After receiving the display request that carries the identifier of the first network resource, the network management apparatus may determine, in the network topology, the common subnet to which the first network resource belongs. Optionally, the common subnet may be a subnet that is in the network topology and that includes the first network resource and includes a smallest quantity of network elements and/or is of a lowest level.

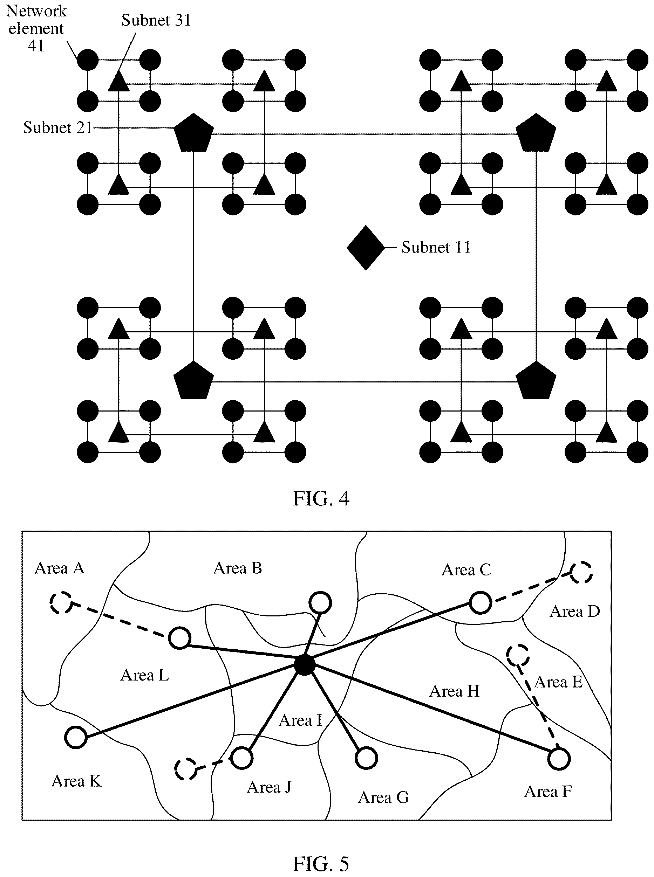

Levels of subnets may be manually determined, or may be automatically generated based on content of the network topology. This is not limited in this embodiment of this application. For example, network elements in the network topology may be divided into subnets of different levels based on geographical locations or importance of the network elements. In a possible implementation, a level-1 subnet may correspond to a national backbone network, a level-2 subnet may correspond to a provincial backbone network, a level-3 subnet may correspond to a municipal network, and a level-4 subnet may correspond to a district network. For example, FIG. 4 is a schematic of a topology structure of a multi-level and multi-subnet physical network model. A subnet 11 formed by a network resource represented by a diamond is a level-1 subnet. A subnet formed by a network resource represented by a pentagon is a level-2 subnet, for example, a subnet 21. A subnet formed by a network resource represented by a triangle is a level-3 subnet, for example, a subnet 31. A subnet formed by a network resource represented by a circle is a level-4 subnet, for example, a single-network element subnet formed by a network element 41. There is a correspondence or inclusion relationship between a higher-level subnet and a lower-level subnet. For example, the subnet 11 is a highest-level subnet in subnets shown in FIG. 4, and includes the subnet 21 and other level-2 subnets. The subnet 21 includes the subnet 31 shown in an upper-left corner of FIG. 4, and three level-3 subnets connected to the subnet 31. The subnet 31 includes the level-4 single subnet formed by the network element 41 in the upper-left corner of FIG. 4, and three level-4 subnets connected to the network element 41.

If the first network resource is one network element, the common subnet may be a smallest subnet that is in the network topology and that includes both a single-network element subnet formed by the network element and at least one other subnet. For example, referring to FIG. 1, a first network resource includes the network element 1 represented by a black circle in the level-3 subnet A. It can be learned from FIG. 1 that the network element 1 belongs to both the level-3 subnet A and the level-2 subnet A. Because the level-3 subnet A is a subnet that includes the network element 1 and that is of a lowest level and includes a smallest quantity of network elements in the subnets that include the network element 1, a common subnet corresponding to the network element 1 may be the level-3 subnet A.

If the first network resource is one network element, the first subnet included in the common subnet corresponding to the first network resource may be a single-network element subnet formed by the first network resource, and the second subnet included in the common subnet may be a subnet, other than the first network resource, in the common subnet.

In a possible implementation, the first network resource includes a plurality of network elements, any one of the plurality of network elements corresponds to a reference subnet, and the reference subnet is a subnet that is in the network topology and that includes the any one of the network elements and includes a smallest quantity of network elements and/or is of a lowest level. In this case, the common subnet may be a subnet that is in the network topology and that includes the plurality of reference subnets corresponding to the plurality of network elements and includes a smallest quantity of network elements and/or is of a lowest level.

If the reference subnets corresponding to the plurality of network elements included in the first network resource are a same subnet, the reference subnet may be determined as the common subnet corresponding to the first network resource. For example, referring to FIG. 1, a first network resource includes the network element 1 and a network element 2 represented by the black circles in the level-3 subnet A. Reference subnets corresponding to the network element 1 and the network element 2 are both a level-3 network A. In this case, the level-3 subnet A may be determined as a common subnet of the first network resource.

If the reference subnets corresponding to the plurality of network elements included in the first network resource are different subnets, a smallest subnet including the reference subnets may be determined as the common subnet corresponding to the first network resource. For example, still referring to FIG. 1, an example in which a first network resource includes two network elements is used. The two network elements are the network element 1 represented by the black circle in the level-3 subnet A and the network element 3 represented by the black circle in the level-3 subnet C. A reference subnet corresponding to the network element 1 may be the level-3 subnet A, and a reference subnet corresponding to the network element 3 may be the level-3 subnet C. Both the level-2 subnet A and the level-1 subnet are subnets including the level-3 subnet A and the level-3 subnet C. In this case, the level-2 subnet A, which includes a smallest quantity of network elements and is of a lowest level, may be determined as a common subnet corresponding to the first network resource.

For another example, still referring to FIG. 1, an example in which a first network resource includes three network elements is used. The three network elements are the network element 1 represented by the black circle in the level-3 subnet A, the network element 3 represented by the black circle in the level-3 subnet C, and the network element 4 represented by the black circle in the level-3 subnet D. A reference subnet corresponding to the network element 1 may be the level-3 subnet A, a reference subnet corresponding to the network element 3 may be the level-3 subnet C, and a reference subnet corresponding to the network element 4 may be the level-3 subnet D. In FIG. 1, only the level-1 subnet is a subnet including the level-3 subnet A, the level-3 subnet C, and the level-3 subnet D. In this case, the level-1 subnet may be determined as a common subnet corresponding to the first network resource.

If the first network resource includes the plurality of network elements, the first subnet included in the common subnet corresponding to the first network resource may be the single-network element subnet formed by the first network resource or the reference subnets respectively corresponding to the network elements in the first network resource, and the second subnet included in the common subnet may be a single-network element subnet formed by another network element or a multi-network element subnet formed by other network elements, other than the first subnet, in the common subnet.

After the common subnet corresponding to the first network resource is determined, the topology information of the common subnet may be determined in the network topology. The topology information of the common subnet may include the information about the at least one network resource of the first subnet and the second subnet, and the connection relationship between the at least one network resource. The information about the network resource is not limited in this embodiment of this application. For example, the information about the network resource may include at least one of a number of the network resource, a physical location at which the network resource resides, a running status of the network resource, and an attribute of the network resource. The running status of the network resource may include an engineering state, under engineering trial, or another state. If the running status of the network resource is the engineering state, it indicates that the network resource has been in use in a project. If the running status of the network resource is under engineering trial, it indicates that the network resource is still in a trial phase and has not been used in a project. The attribute of the network resource may be an intelligent optical transport network (optical transport network, OTN), a router, or the like. A connection relationship between two network resources may be represented by using a connection line. A shape and a type of the connection line are not limited in this embodiment of this application. For example, the shape of the connection line may be a line segment, an arc, a polyline, or the like, and the type of the connection line may be a single line, double lines, a solid line, a dashed line, or the like.

S302: Display the first network resource in a distinguishable manner on a basis of displaying the topology information.

After obtaining the topology information of the common subnet based on the display request, the network management apparatus may convert the topology information of the common subnet into a topology view, and send the topology view to the display apparatus through the topology view sending interface. The display apparatus displays the topology view, to display the topology information of the common subnet.

In this embodiment of this application, based on differences in the at least one network resource of the first subnet and the second subnet, a method for displaying the topology information may include different cases, including but not limited to the following case A1 to case A3.

Case A1: The at least one network resource of the first subnet and the second subnet includes the first subnet and the second subnet.

In a possible implementation, information about the first subnet and the second subnet, and a connection relationship between the first subnet and the second subnet may be displayed. The first subnet may be a subnet formed by a single network element, or may be a subnet including a plurality of network elements.

For example, FIG. 5 is a schematic of a topology information display result. A black circle represents a first subnet, and white solid-line circles connected to the black circle are a second subnet. The display result not only displays the first subnet and the second subnet, but also displays a connection relationship that is between the first subnet and the second subnet and that is represented by using solid line segments. In addition, the display result further includes information about the first subnet and the second subnet, which is not shown in FIG. 5.

Case A2: The at least one network resource of the first subnet and the second subnet includes network elements in the first subnet and the second subnet.

In a possible implementation, the first subnet is a subnet in which the first network resource is located, and the second subnet does not include the queried first network resource. Therefore, the first subnet may be displayed in an expanded manner, and the second subnet may be roughly displayed.

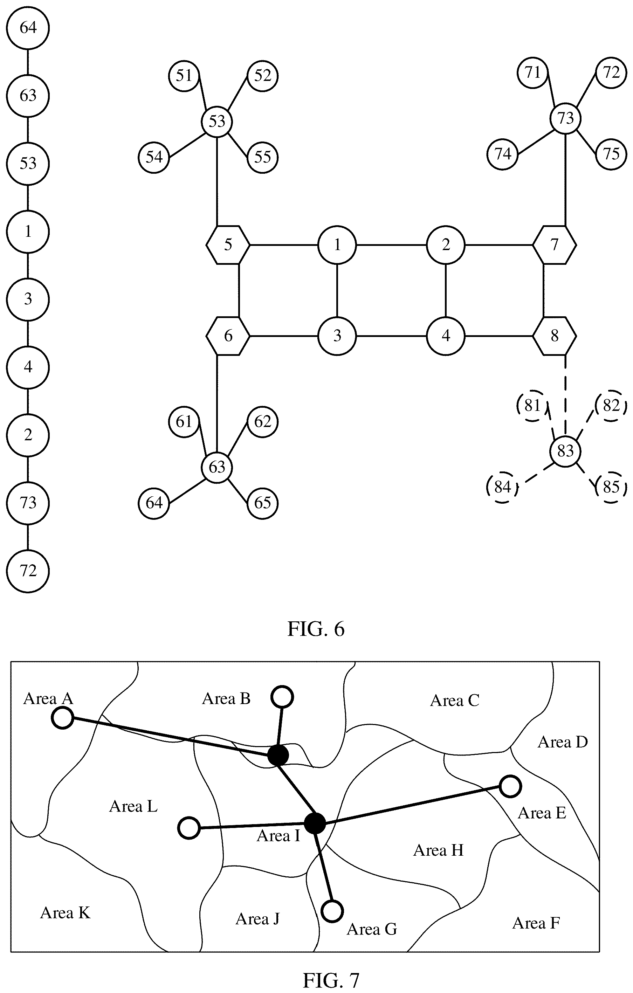

For example, FIG. 6 is a schematic of another topology information display result. On a right side of FIG. 6, there is composition of a common subnet, including a subnet 1 to a subnet 8. A first network resource is a path shown on a left side of FIG. 6, including a network element 64 - a network element 63 - a network element 53 - a network element 1 - a network element 3 - a network element 4 - a network element 2 - a network element 73 - a network element 72. The subnet 1 to the subnet 7 that include the first network resource are displayed in an expanded manner. To be specific, network elements in a first subnet and connection relationships between the network elements are displayed. The subnet 5, the subnet 6, and the subnet 7 are multi-network element subnets, each including five different network elements, and the subnet 1, the subnet 2, the subnet 3, and the subnet 4 are subnets each formed by a single network element. A second subnet that does not include the first network resource, that is, the subnet 8, is roughly displayed. To be specific, only the subnet 8 is displayed; and information about network elements that are included in the subnet 8 and that are represented by using dashed lines, and connection relationships between the network elements included in the subnet 8 are not displayed. In addition, the display result further includes information about the network elements in the first subnet and information about the second subnet, which are not shown in FIG. 6.

Case A3: The at least one network resource of the first subnet and the second subnet includes network elements in the first subnet and network elements in the second subnet.

In this case, both the first subnet and the second subnet are displayed in an expanded manner. To be specific, the network elements included in the first subnet, the network elements included in the second subnet, a connection relationship between the network elements included in the first subnet, and a connection relationship between the network elements included in the second subnet are displayed.

For example, still referring to FIG. 6, if a first network resource is a link formed by the network element 53 and the network element 63, a first subnet is the subnet 5 and the subnet 6, and all of the subnet 1, the subnet 2, the subnet 3, the subnet 4, the subnet 7, and the subnet 8 are a second subnet. In FIG. 6, not only the subnet 5 and the subnet 6 are displayed in an expanded manner, but also the subnet 1, the subnet 2, the subnet 3, the subnet 4, the subnet 7, and the subnet 8 are displayed in an expanded manner.

Regardless of a case corresponding to content included in the at least one network resource of the first subnet and the second subnet, the first network resource may be automatically displayed in a distinguishable manner on the basis of displaying the topology information. For example, focused display is performed on the first network resource, and non-focused display is performed on another network resource in the topology information of the common subnet, so that the another network resource in the topology information of the common subnet is easily distinguished from the first network resource. For example, information about the first network resource and a connection relationship of the first network resource may be highlighted, and the another network resource in the topology information of the common subnet is not highlighted, so that display brightness of the another network resource in the topology information of the common subnet is lower than display brightness of the first network resource. Alternatively, information about the first network resource and a connection relationship of the first network resource may be enlarged for display, so that a display size of the another network resource in the topology information of the common subnet is less than a display size of the first network resource. Still alternatively, different colors may be used to represent the first network resource and the another network resource in the topology information of the common subnet.

For example, referring to FIG. 5, a first network resource is a network resource represented by the black circle in an area I in FIG. 5, and network resources represented by the white circles that are connected by using the black solid lines and that are in an area B, an area C, an area F, an area G, an area J, an area K, and an area L are network resources, other than the first network resource, in the at least one network resource of the first subnet and the second subnet.

FIG. 7 is a schematic of still another topology information display result. A first network resource includes two network elements. For example, the first network resource is a link formed by a network element represented by a black circle in an area B and a network element represented by a black circle in an area I in FIG. 7. Network resources represented by white circles connected to the link are network resources, other than the first network resource, in at least one network resource of a first subnet and a second subnet.

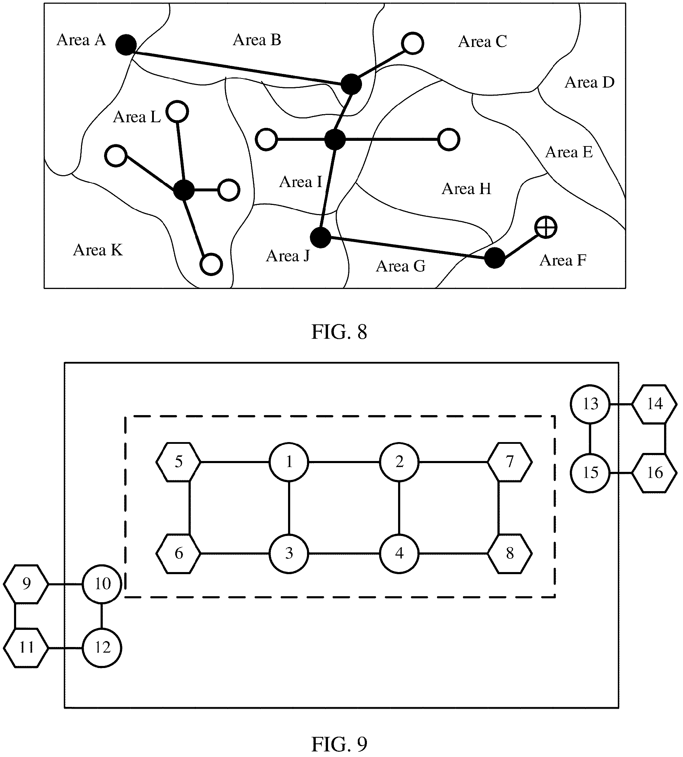

FIG. 8 is a schematic of yet another topology information display result. A first network resource includes six network elements. For example, the first network resource is a path formed by connecting network elements represented by black circles in an area A, an area B, an area I, an area J, and an area F, and a network element represented by a black circle in an area L. Network resources represented by white circles connected to the path and the network element are network resources, other than the first network resource, in at least one network resource of a first subnet and a second subnet.

Optionally, if the first network resource includes a path, automatic focusing may be performed and a previous hop of the path may be displayed during display of the path in this embodiment of this application. For example, a network element represented by a cross-in-circle symbol in FIG. 8 is a previous hop of the path in FIG. 8.

In addition, the user may further click the first network resource in the topology view displayed by the display apparatus, to display the first network resource in a distinguishable manner.

In a possible implementation, in this embodiment of this application, a display status of the first subnet and the second subnet may be adjusted depending on a requirement of the user, that is, a degree of expansion of the first subnet and the second subnet may be adjusted depending on the requirement of the user. The requirement of the user may be sent to the network management apparatus by using the input apparatus. For example, the user may click the first subnet, which is roughly displayed, in the topology view that displays the topology information, and click a subnet expanding button to input a requirement of the user. After the requirement of the user for displaying the first subnet in an expended manner is obtained, the first subnet may be displayed in an expanded manner. Display of the information about the first subnet is changed to display of information about the network elements included in the first subnet and the connection relationship between the network elements included in the first subnet.

For another example, the user may click the second subnet, which is displayed in an expanded manner, in the topology view that displays the topology information, and click a subnet collapsing button to input a requirement of the user. After the requirement of the user for roughly displaying the second subnet is obtained, the second subnet may be roughly displayed. Display of information about the network elements included in the second subnet and the connection relationship between the network elements included in the second subnet is changed to display of the information about the second subnet.

Alternatively, a requirement of the user may be a zoom ratio. In this case, the topology information may be automatically zoomed according to the zoom ratio in this embodiment of this application. Optionally, the user may adjust the zoom ratio of the topology view by scrolling a mouse wheel. The zoom ratio may be determined based on a distance and a direction of scrolling the wheel. For example, scrolling the wheel upward may mean increasing the zoom ratio, and scrolling the wheel downward may mean decreasing the zoom ratio. A larger scrolling distance of the wheel may indicate a larger degree of adjustment of the zoom ratio, and a smaller scrolling distance of the wheel may indicate a smaller degree of adjustment of the zoom ratio.

If a requirement of the user is to decrease the zoom ratio, the first subnet or the second subnet, which is already displayed in an expanded manner, may be roughly displayed. Display of information about the network elements of the first subnet and the connection relationship between the network elements of the first subnet is changed to display of the information about the first subnet; or display of information about the network elements of the second subnet and the connection relationship between the network elements of the second subnet is changed to display of the information about the second subnet; or display of information about the network elements of the first subnet and the network elements of the second subnet, and connection relationships between the network elements of the first subnet and the network elements of the second subnet is changed to display of the information about the first subnet and the second subnet and the connection relationship between the first subnet and the second subnet.

If a requirement of the user is to increase the zoom ratio, the first subnet or the second subnet, which is roughly displayed, may be displayed in an expanded manner. Display of the information about the first subnet is changed to display of information about the network elements of the first subnet and the connection relationship between the network elements of the first subnet.

Optionally, a subnet may be expanded or collapsed by level during automatic zooming, to implement a process of automatic multi-level zooming display. The process may include: computing levels of the first subnet and a reference subnet of the first network resource, determining a hierarchical path from the first subnet to the reference subnet of the first network resource, and expanding subnets along the hierarchical path in place and level by level. For example, referring to FIG. 1, if a first subnet is a level-2 subnet, the first subnet includes the level-3 subnet A and the level-3 subnet B, the level-3 subnet A may further include a level-4 subnet A and a level-4 subnet B, which are not shown in FIG. 1, and the level-4 subnet A is a reference subnet of a first network resource, and if the first subnet is roughly displayed, the first subnet may be displayed in an expanded manner after a user requirement for increasing a zoom ratio is received for the first time. Information about the level-3 subnet A and the level-3 subnet B in the first subnet, and a connection relationship between the level-3 subnet A and the level-3 subnet B are displayed. Then, if a user requirement for increasing the zoom ratio is received for the second time, the level-3 subnet A may be displayed in an expanded manner. Information about the level-4 subnet A and the level-4 subnet B, and a connection relationship between the level-4 subnet A and the level-4 subnet B are displayed. In this way, multi-level zooming display is implemented for the first subnet.

As shown in FIG. 6, a smallest common subnet of the link formed by the network element 53 and the network element 63 is a subnet to which the subnet 6 and the subnet 5 belong, that is, the subnet formed by the subnet 1 to the subnet 8. When the link is displayed, a link connecting the subnet 6 and the subnet 5 may be displayed. Automatic multi-level zooming may further be implemented based on the automatic zooming function, to automatically expand reference subnets to which the network elements at two ends of the link belong. In other words, the subnet 5 and the subnet 6 are automatically expanded. The link is displayed as a precise connection between the network element 63 and the network element 53. In this way, a complete end-to-end (end-to-end, E2E) path of the link in the topology in zooming mode is viewed.

In a possible implementation, association information of the common subnet may further be obtained in this embodiment of this application. The association information includes information about a second network resource connected to the common subnet, and a connection relationship between the second network resource and the at least one network resource of the first subnet and the second subnet. The association information of the common subnet is displayed on the basis of displaying the topology information.

For example, referring to FIG. 5, the network elements connected by using the solid lines in FIG. 5 are the at least one network resource included in a common subnet, and dashed-line circles that are in an area A, an area D, an area E, and the area L and that are connected to the at least one network resource of the common subnet by using dashed lines are a second network resource. The dashed lines in the figure indicate connection relationships between the second network resource and the at least one network resource. In addition, the display result further includes information about the second network resource, which is not shown in FIG. 5.

Optionally, obtaining the association information of the common subnet may include: determining, in a third subnet based on the topology information of the common subnet and a subnet parameter of the third subnet connected to the common subnet, the second network resource connected to the common subnet, where the subnet parameter includes at least one of subnet density and subnet depth, the subnet density indicates a degree of density of network elements in the third subnet, and the subnet depth indicates a relative level of the third subnet with respect to a reference level; and determining the association information of the common subnet based on the second network resource.

In a possible implementation, the subnet density may be a ratio of a quantity of the network elements included in the third subnet to an extent of the third subnet; and the subnet depth may be a difference between a level of the third subnet and a level of a reference subnet, and the reference level may be a level that is set statically, or may be dynamically adjusted depending on a display requirement.

For example, the topology information of the common subnet may be determined as a central area of a to-be-displayed area, and an extent of the to-be-displayed area is computed based on an extent of the central area. In addition, the second network resource within the extent of the to-be-displayed area and at a zoom degree is determined based on the third subnet included in a topology tree in the network topology, a zoom scale, and the subnet parameter of the third subnet. The to-be-displayed area is an area visible to the user.

Neither a method for computing the extent of the to-be-displayed area nor a method for representing the extent of the to-be-displayed area is limited in this embodiment of this application. For example, an extent that is N times an extent of the common subnet may be determined as the to-be-displayed area, where N may be greater than or equal to 1. The extent of the to-be-displayed area may be represented by using coordinates. For example, if the to-be-displayed area is a rectangle, two-dimensional coordinates (x0y0, x1y1) may be used to represent two diagonally opposite corners of the to-be-displayed area, so as to represent the extent of the to-be-displayed area.

For example, FIG. 9 is a schematic of a to-be-displayed area. A solid-line rectangle represents a to-be-displayed area that is in a network topology and that is obtained through computation. A part enclosed by dashed lines is a common subnet. A subnet 10, a subnet 12, a subnet 13, and a subnet 15 are a third subnet that is connected to the common subnet and that is in the to-be-displayed area. A subnet 9, a subnet 11, a subnet 14, and a subnet 16 are subnets that are in the network topology and that are not in the to-be-displayed area.

After the to-be-displayed area is determined, the third subnet that is connected to the common subnet and that is in the to-be-displayed area at the current zoom degree may be determined based on the zoom scale. Then, the second network resource may be determined based on the at least one of the subnet density and the subnet depth of the third subnet. For example, the second network resource is determined based on the subnet density of the third subnet. If the determined subnet density of the third subnet is greater than a density threshold, that is, the third subnet includes a small quantity of network elements but the third subnet corresponds to a large extent, a manner for displaying the third subnet may be determined as rough display, that is, the third subnet is determined as the second network resource. Alternatively, if the subnet density of the third subnet is less than or equal to a density threshold, that is, the third subnet includes a large quantity of network elements but the third subnet corresponds to a small extent, a manner for displaying the third subnet may be determined as expanded display, that is, all or some of the network elements included in the third subnet are determined as the second network resource.

Correspondingly, for example, the second network resource is determined based on the subnet depth of the third subnet. If the reference level is a level of the common subnet, and the depth of the third subnet is large, that is, a difference between the level of the third subnet and the level of the common subnet is large, it indicates a weak association between network resources included in the third subnet and the at least one network resource in the common subnet. In this case, a manner for displaying the third subnet may be determined as rough display, that is, the third subnet is determined as the second network resource. If the depth of the third subnet is small, that is, a difference between the level of the third subnet and the level of the common subnet is small, it indicates a strong association between network resources included in the third subnet and the at least one network resource in the common subnet. In this case, a manner for displaying the third subnet may be determined as expanded display, that is, all the network elements or some network elements included in the third subnet are determined as the second network resource.

In a possible implementation, the reference level is a lowest level in the network topology. In this case, if the depth of the third subnet is larger, it indicates that the extent of the third subnet is larger, and there is a lower probability that the third subnet is displayed in an expanded manner; or if the depth of the third subnet is smaller, it indicates that the extent of the third subnet is smaller, and there is a higher probability that the third subnet is displayed in an expanded manner. In addition, the second network resource may alternatively be determined by comprehensively considering the subnet density and the subnet depth of the third subnet.

In a related technology, only a search for a single network resource is supported, and a search for a group of network resources, such as a search for a complete forwarding path or a fuzzy search, cannot be supported. After a search for a network resource is performed, a subnet in which the network resource is located is determined, and a single subnet topology of the subnet is displayed, to locate the network resource. For example, when a plurality of network elements that are searched for are distributed in a plurality of different subnets, a local forwarding path within a lowest-level single subnet to which each network element in a path belongs is usually viewed in the related technology. For example, in FIG. 6, two endpoints of a link C are the network element 63 and the network element 53. In the related technology, when the link C is displayed, the subnet 6 to which the network element 63 belongs and the subnet 5 to which the network element 53 belongs are separately displayed, but a connection relationship between the subnet 6 and the subnet 5 is not displayed. In the network resource display method in the related technology, a network relationship or a connection relationship between a subnet to which a network resource belongs and another subnet is disrupted, limiting usability of a network management and control system, and resulting in a poor visualization effect of network resource display.

In this embodiment of this application, the topology information including the information about the at least one network resource of the first subnet and the second subnet and the connection relationship between the at least one network resource is displayed, so that the displayed topology information is more comprehensive. The first network resource is displayed in a distinguishable manner in the topology information, so that the first network resource is displayed with a good visualization effect.

In conclusion, in this embodiment of this application, the first network resource that spans the plurality of levels of subnets can be displayed in the multi-level and multi-subnet network topology in an automatic focusing manner. Automatic focusing on the first network resource enables adaptive presentation of the topology information of the common subnet corresponding to the first network resource. A display area of the common subnet in the network topology can be determined through comprehensive computation that is performed based on a position of the common subnet in the network topology and a subnet parameter of the common subnet. Network resource topology information to be displayed may be presented based on the zoom ratio and the to-be-displayed area. In addition, the method provided in this embodiment of this application not only supports a search for a single network resource, but also supports a search for a plurality of network resources and a fuzzy search, improving reliability of a search result.

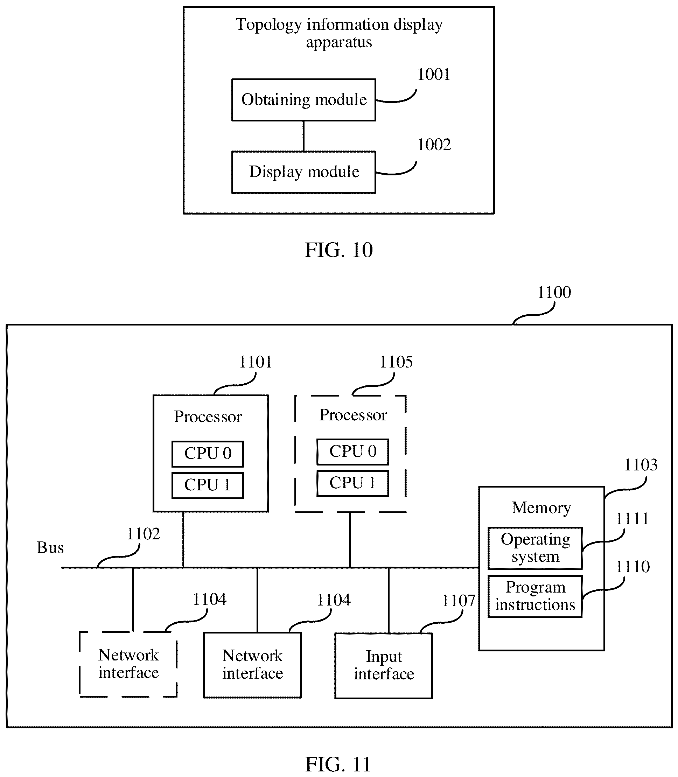

The foregoing describes the topology information display method provided in embodiments of this application. Corresponding to the foregoing method, an embodiment of this application further provides a topology information display apparatus. The apparatus is configured to perform, by using modules shown in FIG. 10, the topology information display method shown in FIG. 3. As shown in FIG. 10, the topology information display apparatus provided in this embodiment of this application includes the following several modules:
an obtaining module 1001, configured to obtain topology information of a common subnet corresponding to a display request specific to a first network resource, where the common subnet includes a first subnet and a second subnet, the first subnet is a subnet that includes the first network resource, the second subnet is a subnet other than the first subnet, and the topology information includes information about at least one network resource of the first subnet and the second subnet, and a connection relationship between the at least one network resource; and a display module 1002, configured to display the first network resource in a distinguishable manner on a basis of displaying the topology information.

In a possible implementation, the common subnet is a subnet that is in a network topology and that includes the first network resource and includes a smallest quantity of network elements and/or is of a lowest level.

In a possible implementation, the first network resource includes a plurality of network elements, any one of the plurality of network elements corresponds to a reference subnet, and the reference subnet is a subnet that is in the network topology and that includes the any one of the network elements and includes a smallest quantity of network elements and/or is of a lowest level; and the common subnet is a subnet that is in the network topology and that includes the plurality of reference subnets corresponding to the plurality of network elements and includes a smallest quantity of network elements and/or is of a lowest level.

In a possible implementation, the at least one network resource of the first subnet and the second subnet includes any one of the following: the first subnet and the second subnet; network elements in the first subnet and the second subnet; or network elements in the first subnet and network elements in the second subnet.

In a possible implementation, the obtaining module 1001 is further configured to obtain association information of the common subnet, where the association information includes information about a second network resource connected to the common subnet, and a connection relationship between the second network resource and the at least one network resource of the first subnet and the second subnet; and the display module 1002 is further configured to display the association information of the common subnet on the basis of displaying the topology information.

In a possible implementation, the obtaining module 1001 is configured to: determine, in a third subnet based on the topology information of the common subnet and a subnet parameter of the third subnet connected to the common subnet, the second network resource connected to the common subnet, where the subnet parameter includes at least one of subnet density and subnet depth, the subnet density indicates a degree of density of network elements in the third subnet, and the subnet depth indicates a relative level of the third subnet with respect to a reference level; and determine the association information of the common subnet based on the second network resource.

In a possible implementation, the display module 1002 is configured to: obtain an identifier that is of the first network resource and that is carried in the display request; and determine the topology information of the common subnet based on the identifier of the first network resource and the network topology.

It should be understood that, when the apparatus provided in FIG. 10 implements the functions of the apparatus, beneficial effects of the apparatus are the same as the beneficial effects of the topology information display method provided in FIG. 3. Details are not described herein again. When the apparatus provided in FIG. 10 implements the functions of the apparatus, division into the foregoing functional modules is merely used as an example for description. During actual application, the foregoing functions may be allocated to and implemented by different functional modules depending on a requirement, that is, an internal structure of a device is divided into different functional modules, to implement all or some of the foregoing described functions. In addition, a concept of the apparatus provided in the foregoing embodiment is the same as that of the method embodiment. For a specific implementation process of the apparatus, refer to the method embodiment. Details are not described herein again.

FIG. 11 is a diagram of a structure of a topology information display device 1100, which is used as an example, according to this application. The topology information display device 1100 includes at least one processor 1101, a memory 1103, an input interface 1107, and at least one network interface 1104.

The processor 1101 is, for example, a general-purpose central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor or one or more integrated circuits or application-specific integrated circuits (application-specific integrated circuit, ASIC) configured to implement the solutions in this application, a programmable logic device (programmable logic device, PLD), another general-purpose processor or another programmable logic device, a discrete gate, a transistor logic device, a discrete hardware component, or any combination thereof. The PLD is, for example, a complex programmable logic device (complex programmable logic device, CPLD), a field-programmable logic gate array (field-programmable gate array, FPGA), generic array logic (generic array logic, GAL), or any combination thereof. The general-purpose processor may be a microprocessor, any conventional processor, or the like. It should be noted that the processor may be a processor that supports an advanced reduced instruction set computer machine (advanced RISC machine, ARM) architecture. The processor may implement or execute various logical blocks, modules, and circuits described with reference to the content disclosed in this application. Alternatively, the processor may be a combination implementing a computing function, for example, a combination including one or more microprocessors, or a combination of a DSP and a microprocessor.

Optionally, the topology information display device 1100 further includes a bus 1102. The bus 1102 is configured to transfer information between the components of the topology information display device 1100. The bus 1102 may be a peripheral component interconnect (peripheral component interconnect, PCI for short) bus, an extended industry standard architecture (extended industry standard architecture, EISA for short) bus, or the like. The bus 1102 may be classified into an address bus, a data bus, a control bus, and the like. For ease of representation, only one line is used for representation in FIG. 11. However, this does not mean that there is only one bus or only one type of bus.

The memory 1103 is, for example, a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and the random access memory is used as an external cache.

Through illustrative but not restrictive descriptions, many forms of ROMs and RAMs may be used. For example, the ROM is a compact disc read-only memory (compact disc read-only memory, CD-ROM). The RAM includes but is not limited to a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct rambus random access memory (direct rambus RAM, DR RAM).

Alternatively, the memory 1103 may be another type of storage device that can store static information and instructions; or may be another type of dynamic storage device that can store information and instructions; or may be other compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer. However, the memory 1103 is not limited thereto. For example, the memory 1103 exists independently, and is connected to the processor 1101 by the bus 1102. The memory 1103 may alternatively be integrated with the processor 1101.

The network interface 1104 is configured to communicate with another device or a communication network through any transceiver-like apparatus. The communication network may be an Ethernet, a radio access network (radio access network, RAN), a wireless local area network (wireless local area network, WLAN), or the like. The network interface 1104 may include a wired network interface, and may further include a wireless network interface. Specifically, the network interface 1104 may be an Ethernet (Ethernet) interface, such as a fast Ethernet (fast Ethernet, FE) interface or a gigabit Ethernet (gigabit Ethernet, GE) interface, an asynchronous transfer mode (asynchronous transfer mode, ATM) interface, a WLAN interface, a cellular network interface, or a combination thereof. The Ethernet interface may be an optical interface, an electrical interface, or a combination thereof. In some implementations of this application, the network interface 1104 may be used by the topology information display device 1100 to communicate with another device.

During specific implementation, in some implementations, the processor 1101 may include one or more CPUs, for example, a CPU 0 and a CPU 1 shown in FIG. 11. Each of the processors may be a single-core processor, or may be a multi-core processor. The processor herein may be one or more devices, circuits, and/or processing cores configured to process data (for example, computer program instructions).

During specific implementation, in some implementations, the topology information display device 1100 may include a plurality of processors, for example, a processor 1101 and a processor 1105 shown in FIG. 11. Each of the processors may be a single-core processor, or may be a multi-core processor. The processor herein may be one or more devices, circuits, and/or processing cores configured to process data (for example, computer program instructions).

In some implementations, the memory 1103 is configured to store program instructions 1110 for executing the solutions in this application, and an operating system 1111. The processor 1101 may execute the program instructions 1110 stored in the memory 1103. In other words, the topology information display device 1100 may implement, by using the processor 1101 and the program instructions 1110 in the memory 1103, the method provided in the method embodiment, that is, the method shown in FIG. 3. The program instructions 1110 may include one or more software modules. Optionally, the processor 1101 may also store the program instructions for executing the solutions in this application.

In a specific implementation process, the topology information display device 1100 in this application may correspond to a first network element device configured to perform the foregoing method. The processor 1101 in the topology information display device 1100 reads the instructions in the memory 1103, so that the topology information display device 1100 shown in FIG. 11 can perform all or some of the steps in the method embodiment.

The topology information display device 1100 may alternatively correspond to the apparatus shown in FIG. 10. Each functional module in the apparatus shown in FIG. 10 is implemented by using software of the topology information display device 1100. In other words, the functional modules included in the apparatus shown in FIG. 10 are generated after the processor 1101 of the topology information display device 1100 reads the program instructions 1110 stored in the memory 1103.

The steps in the method shown in FIG. 3 are completed by using a hardware integrated logic circuit in the processor of the topology information display device 1100, or by using the instructions in a form of software. The steps in the method embodiment disclosed with reference to this application may be directly performed and completed by the hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps in the foregoing method embodiment in combination with hardware of the processor. To avoid repetition, details are not described herein again.

In an example embodiment, a computer program (product) is provided. The computer program (product) includes computer program code. When the computer program code is run by a computer, the computer is enabled to perform the method shown in FIG. 3.

In an example embodiment, a computer-readable storage medium is provided. The computer-readable storage medium stores a program or instructions. When the program or the instructions are run on a computer, the computer performs the method shown in FIG. 3.

In an example embodiment, a chip is provided, including a processor, configured to: invoke, from a memory, instructions stored in the memory and run the instructions, so that a computer in which the chip is installed performs the method shown in FIG. 3.

In an example embodiment, another chip is provided, including an input interface, an output interface, a processor, and a memory. The input interface, the output interface, the processor, and the memory are connected through an internal connection path. The processor is configured to execute code in the memory. When the code is executed, a computer in which the chip is installed performs the method shown in FIG. 3.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instruction is loaded and executed on a computer, all or some of the procedures or functions according to this application are generated. The computer may be a general-purpose computer, a dedicated computer, a computer network, or another programmable apparatus. The computer instruction may be stored in a computer-readable storage medium or be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk), or the like.

Terms such as "first" and "second" in this application are used to distinguish between identical items or similar items with basically same roles and functions. It should be understood that there is no logical or timing dependency between "first", "second", and "n^{th}", and neither a quantity nor an execution sequence is limited. It should be further understood that although the following descriptions use terms such as "first" and "second" to describe various elements, these elements should not be limited by the terms. These terms are only used to distinguish one element from another element.

It should be further understood that sequence numbers of the processes do not mean execution sequences in embodiments of this application. The execution sequences of the processes should be determined based on functions and internal logic of the processes, and should not be construed as any limitation on the implementation processes of embodiments of this application.

The term "at least one" in this application means one or more, and the term "a plurality of" in this application means two or more. For example, a plurality of second devices means two or more second devices. The terms "system" and "network" are often used interchangeably in this specification.

It should be understood that the terms used in the descriptions of the various examples in this specification are merely intended to describe the specific examples rather than to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any or all possible combinations of one or more of associated listed items. The term "and/or" describes an association relationship between associated objects, and indicates that three relationships may exist. For example, A and/or B may indicate the following three cases: Only A exists, both A and B exist, and only B exists. In addition, the character "/" in this application usually indicates an "or" relationship between associated objects.

It should be further understood that the terms "if" and "assuming that" may be interpreted to mean "when" ("when" or "upon") or "in response to determining" or "in response to detecting". Likewise, according to the context, the phrase "if it is determined that" or "if (a stated condition or event) is detected" may be interpreted to mean "when it is determined that", "in response to determining", "when (a stated condition or event) is detected", or "in response to detecting (a stated condition or event)".

The foregoing descriptions are merely embodiments of this application, but are not intended to limit this application. Any modification, equivalent replacement, improvement, or the like made without departing from the principle of this application shall fall within the protection scope of this application.

## Claims

1. A topology information display method, wherein the method comprises:
obtaining topology information of a common subnet corresponding to a display request specific to a first network resource, wherein the common subnet comprises a first subnet and a second subnet, the first subnet is a subnet that comprises the first network resource, the second subnet is a subnet other than the first subnet, and the topology information comprises information about at least one network resource of the first subnet and the second subnet, and a connection relationship between the at least one network resource; and
displaying the first network resource in a distinguishable manner on a basis of displaying the topology information.

2. The method according to claim 1, wherein the common subnet is a subnet that is in a network topology and that comprises the first network resource and comprises a smallest quantity of network elements and/or is of a lowest level.

3. The method according to claim 2, wherein the first network resource comprises a plurality of network elements, any one of the plurality of network elements corresponds to a reference subnet, and the reference subnet is a subnet that is in the network topology and that comprises the any one of the network elements and comprises a smallest quantity of network elements and/or is of a lowest level; and
the common subnet is a subnet that is in the network topology and that comprises the plurality of reference subnets corresponding to the plurality of network elements and comprises a smallest quantity of network elements and/or is of a lowest level.

4. The method according to any one of claims 1 to 3, wherein the at least one network resource of the first subnet and the second subnet comprises any one of the following:
the first subnet and the second subnet;
network elements in the first subnet and the second subnet; or
network elements in the first subnet and network elements in the second subnet.

5. The method according to any one of claims 1 to 4, wherein the method further comprises:
obtaining association information of the common subnet, wherein the association information comprises information about a second network resource connected to the common subnet, and a connection relationship between the second network resource and the at least one network resource of the first subnet and the second subnet; and
displaying the association information of the common subnet on the basis of displaying the topology information.

6. The method according to claim 5, wherein obtaining the association information of the common subnet comprises:
determining, in a third subnet based on the topology information of the common subnet and a subnet parameter of the third subnet connected to the common subnet, the second network resource connected to the common subnet, wherein the subnet parameter comprises at least one of subnet density and subnet depth, the subnet density indicates a degree of density of network elements in the third subnet, and the subnet depth indicates a relative level of the third subnet with respect to a reference level; and
determining the association information of the common subnet based on the second network resource.

7. The method according to any one of claims 1 to 6, wherein obtaining the topology information of the common subnet corresponding to the display request specific to the first network resource comprises:
obtaining an identifier that is of the first network resource and that is carried in the display request; and
determining the topology information of the common subnet based on the identifier of the first network resource and the network topology.

8. A topology information display apparatus, wherein the apparatus comprises:
an obtaining module, configured to obtain topology information of a common subnet corresponding to a display request specific to a first network resource, wherein the common subnet comprises a first subnet and a second subnet, the first subnet is a subnet that comprises the first network resource, the second subnet is a subnet other than the first subnet, and the topology information comprises information about at least one network resource of the first subnet and the second subnet, and a connection relationship between the at least one network resource; and
a display module, configured to display the first network resource in a distinguishable manner on a basis of displaying the topology information.

9. The apparatus according to claim 8, wherein the common subnet is a subnet that is in a network topology and that comprises the first network resource and comprises a smallest quantity of network elements and/or is of a lowest level.

10. The apparatus according to claim 9, wherein the first network resource comprises a plurality of network elements, any one of the plurality of network elements corresponds to a reference subnet, and the reference subnet is a subnet that is in the network topology and that comprises the any one of the network elements and comprises a smallest quantity of network elements and/or is of a lowest level; and the common subnet is a subnet that is in the network topology and that comprises the plurality of reference subnets corresponding to the plurality of network elements and comprises a smallest quantity of network elements and/or is of a lowest level.

11. The apparatus according to any one of claims 8 to 10, wherein the at least one network resource of the first subnet and the second subnet comprises any one of the following: the first subnet and the second subnet; network elements in the first subnet and the second subnet; or network elements in the first subnet and network elements in the second subnet.

12. The apparatus according to any one of claims 8 to 11, wherein the obtaining module is further configured to obtain association information of the common subnet, wherein the association information comprises information about a second network resource connected to the common subnet, and a connection relationship between the second network resource and the at least one network resource of the first subnet and the second subnet; and the display module is further configured to display the association information of the common subnet on the basis of displaying the topology information.

13. The apparatus according to claim 12, wherein the obtaining module is configured to: determine, in a third subnet based on the topology information of the common subnet and a subnet parameter of the third subnet connected to the common subnet, the second network resource connected to the common subnet, wherein the subnet parameter comprises at least one of subnet density and subnet depth, the subnet density indicates a degree of density of network elements in the third subnet, and the subnet depth indicates a relative level of the third subnet with respect to a reference level; and determine the association information of the common subnet based on the second network resource.

14. The apparatus according to any one of claims 8 to 13, wherein the obtaining module is configured to: obtain an identifier that is of the first network resource and that is carried in the display request; and determine the topology information of the common subnet based on the identifier of the first network resource and the network topology.

15. A topology information display device, wherein the device comprises a processor, the processor is coupled to a memory, the memory stores at least one instruction, and the at least one instruction is loaded and executed by the processor, so that the topology information display device implements the topology information display method according to any one of claims 1 to 7.

16. A computer-readable storage medium, wherein the computer-readable storage medium stores at least one instruction, and the instruction is loaded and executed by a processor to implement the topology information display method according to any one of claims 1 to 7.

17. A computer program product, wherein the computer program product comprises a computer program/instructions, and the computer program/instructions are executed by a processor, so that a computer implements the topology information display method according to any one of claims 1 to 7.
